(19)

Europäisches
Patentamt
European
Patent Office
Office européen
des brevets

(11)  **EP 1 977 946 B1**

(12)  **EUROPÄISCHE PATENTSCHRIFT**

(45) Veröffentlichungstag und Bekanntmachung des
Hinweises auf die Patenterteilung:
**20.06.2012   Patentblatt 2012/25**

(51) Int Cl.:
***B60W 30/08*** *(2012.01)*     ***G08G 1/16*** *(2006.01)*

(21) Anmeldenummer: **08102216.2**

(22) Anmeldetag: **03.03.2008**

(54) **Fahrerassistenzsystems für die Umfeld-Erkennung und Erfassung einer Solltrajektorie**

Driver assistant system for the recognition of the environment and estimation of trajectory

Système d'assistance du conducteur avec identification de l'environnement et estimation d'une trajectoire

(84) Benannte Vertragsstaaten:
**DE ES FR GB**

(30) Priorität: **02.04.2007   DE 102007015879**

(43) Veröffentlichungstag der Anmeldung:
**08.10.2008   Patentblatt 2008/41**

(73) Patentinhaber: **Robert Bosch GmbH**
**70442 Stuttgart (DE)**

(72) Erfinder:
 • **Buerkle, Lutz**
  **71229, Leonberg (DE)**

 • **Weilkes, Michael**
  **31199, Diekholzen (DE)**
 • **Scherl, Michael**
  **74321, Bietigheim (DE)**
 • **Rentschler, Tobias**
  **75180, Pforzheim (DE)**

(56) Entgegenhaltungen:
**EP-A- 1 475 765        EP-A- 1 632 383**
**DE-A1-102005 002 760    DE-A1-102005 021 845**

EP 1 977 946 B1

**Beschreibung**

Stand der Technik

Die Erfindung betrifft ein Verfahren für die Steuerung eines Fahrerassistenzsystems nach dem Oberbegriff des Anspruchs 1. Weiterhin betrifft die Erfindung eine Vorrichtung für die Steuerung eines Fahrerassistenzsystems gemäß Anspruch 15. Es sind bereits Fahrerassistenzsysteme bekannt, die den Fahrer eines Fahrzeugs bei dem Einhalten einer gewählten Fahrspur unterstützen. Das Fahrerassistenzsystem umfasst dazu Assistenzfunktionen wie LDW (Lane Departure Warning) und LKS (Lane Keeping Support). Die Assistenzfunktion LDW warnt den Fahrer vor einem Verlassen der Fahrspur durch Erzeugung von optischen und/oder akustischen und/oder haptischen Signalen. Die Assistenzfunktion LKS greift aktiv in Bordsysteme des Fahrzeugs, insbesondere in das Lenksystem ein, um ein von der Fahrspur abweichendes Fahrzeug in der Fahrspur zu halten. Das Fahrerassistenzsystem umfasst dazu ein insbesondere mindestens einen Videosensor umfassendes Sensorsystem für die Erfassung von Fahrspurmarkierungen oder dergleichen.

Bisher bekannte Fahrerassistenzsysteme mit Querführungsfunktionen wie zum Beispiel LDW, LKS oder eine automatische Querführung in einem Stauassistenzsystem versuchen das Fahrzeug möglichst in der Mitte der Fahrspur zu führen. Die meisten Fahrer empfinden es aber eher als unangenehm, streng genau die Mitte der eigenen Fahrspur einzuhalten, wenn ein Fahrzeug auf einer benachbarten Fahrspur sehr nahe an der Begrenzung der eigenen Fahrspur fährt oder die Fahrspurbegrenzung sogar überfährt und somit auf die eigene Fahrspur gelangt. Als besonders unangenehm oder sogar bedrohlich wird diese Situation dann empfunden, wenn es sich bei dem Fahrzeug auf der Nachbarspur um ein großes Fahrzeug, wie zum Beispiel einen NKw oder einen Bus handelt.

Aus DE 10 2004 015 749 A1 ist eine Vorrichtung zur Bestimmung einer Durchfahrtsmöglichkeit für ein Fahrzeug an Hindernissen bekannt, die dazu dient, abzuschätzen, ob ein Fahrzeug bezüglich seiner Fahrzeughöhe und/oder seiner Fahrzeugbreite zwischen Hindernissen hindurchfahren kann. Die Vorrichtung umfasst eine Sensoreinheit zur Messung der Durchfahrtsbreite zwischen Hindernissen und/oder einer Durchfahrtshöhe unter Hindernissen und eine Auswerteeinheit, wobei von der Auswerteeinheit die ermittelte Durchfahrtsbreite und/oder die ermittelte Durchfahrtshöhe mit einer Fahrzeugbreite und/oder Fahrzeughöhe derart verglichen wird, dass eine Warnung für den Fall ausgegeben wird, dass die ermittelte Durchfahrtshöhe und/oder die ermittelte Durchfahrtsbreite eine Durchfahrtsmöglichkeit des Fahrzeugs an den Hindernissen nicht zulasse.

Aus DE 10 2005 021 845 A1 ist ein Fahrzeugbedienungs-Unterstützungssystem bekannt, das einen Unterstützungsgierratenrechner umfasst, der einen erforderlichen Bewegungsbetrag zur Vermeidung eines Hindernisses auf der Basis eines Erfassungsergebnisses des Hindernisses durch eine Radarvorrichtung berechnet. Das Fahrzeugbedienungs-Unterstützungssystem umfasst weiter ein Fahrzeugbewegungssteuergerät, das die Querbewegung des Fahrzeugs auf der Basis des berechneten Bewegungsbetrags steuert. Wenn ein Vermeidungsbedienungsdetektor das Einleiten einer Hindernisvermeidungsbedienung durch einen Fahrer bestimmt, betätigt das Fahrzeugbewegungssteuergerät eine Bremsvorrichtung zum Steuern der Querbewegung des Fahrzeugs, so dass das Hindernis zuverlässig vermieden oder umfahren werden kann. Wenn ein Rückstellbedienungsdetektor das Einleiten einer Rückstellbedienung bestimmt, betreibt das Fahrzeugbewegungssteuergerät eine Servolenkvorrichtung, um die Querbewegung des Fahrzeugs zu beeinflussen, so dass eine Verzögerung der Lenkbedienung durch den Fahrer und eine zu starke Rückstellbedienung des Lenkrads zum Kompensieren der Verzögerung unterdrückt werden, um hierdurch das Fahrverhalten zu stabilisieren. Hierdurch wird ein Fahrzeugbedienungs-Unterstützungssystem bereitgestellt, das sowohl eine Hindernisvermeidungsbedienung als auch eine Rückstellbedienung durch einen Fahrer richtig unterstützen kann.

Aus DE 10 2005 002 760 A1 sind eine Vorrichtung und ein Verfahren zur Unfallvermeidung von Kraftfahrzeugen bekannt. Das Verfahren umfasst die Schritte: Erstellen eines digitalen Lagebildes der Umgebung eines Fahrzeugs mittels eines Fahrumgebungserfassungssystems , Zuordnung eines Dynamikmodells zu jedem erfassten Objekt und zum Fahrzeug zum Erhalt eines Umfeldmodells, dessen Koordinatensystem fahrbahnfest ist und sich mit dem Fahrzeug mitbewegt, Durchführen einer Kollisionserkennung hinsichtlich der erfassten Objekte und des Fahrzeugs, wobei das Fahrzeug und die Objekte im Umfeldmodell mit einer vorgegebenen geometrischen Form beschrieben sind, die Kollisionserkennung die Größen Kollisionszeit und Kollisionsort ermittelt, aus denen eine Ablage Lambda bestimmt wird, die die Kollisionssituation wiedergibt, und aus der Unsicherheit der Ablage Lambda eine Kollisionswahrscheinlichkeit ermittelt wird, Planen einer Kollisionsvermeidung bei bevorstehender Kollision, wobei die Kollisionsvermeidung ein im fahrphysikalischen Grenzbereich angesiedeltes Notmanöver ist, das aus den Bestandteilen Bremsen und linkem oder rechtem Ausweichen auf einer prädizierten Trajektorie besteht, wobei der Bremsvorgang Priorität vor den Ausweichmanövern hat und das Notmanöver insbesondere mit dem Stillstand des Fahrzeugs endet, und Durchführen des geplanten Notmanövers.

Aus EP 1 475 765 A2 ist eine Vorrichtung zur Bestimmung einer Durchfahrtsmöglichkeit für ein Fahrzeug an Hindernissen, insbesondere für Kraftfahrzeuge, bekannt, mit einer Sensoreinheit zur Messung einer Durchfahrtsbreite zwischen Hindernissen und/oder einer Durchfahrtshöhe unter Hindernissen und mit einer Auswerteeinheit, wobei von der Auswerteeinheit die vermittelte Durchfahrtsbreite und/oder die ermittelte Durchfahrtshöhe mit einer Fahrzeugbreite und/oder einer Fahrzeughöhe derart verglichen wird, dass eine Warnung für den Fall ausgegeben wird, dass die ermittelte Durchfahrtshöhe und/oder die ermittelte Durchfahrtsbreite eine Durchfahrtsmöglichkeit des Fahrzeugs an den Hindernissen nicht zulassen.

Offenbarung der Erfindung

Technische Aufgabe

Der Erfindung liegt die Aufgabe zugrunde, ein Fahrerassistenzsystem derart weiterzuentwickeln, das dem Fahrer ein gesteigertes Sicherheitsgefühl, insbesondere bei dem Passieren von Engstellen, vermittelt wird. Unter Engstellen im Sinne der vorliegenden Erfindung sind insbesondere auch dynamische Fahrbahnverengungen zu verstehen, die sich beispielsweise dadurch ergeben, dass ein Fahrzeug auf einer benachbarten Spur seinen Kurs nicht beibehält, sondern sich der Nachbarspur unzulässig annähert oder sogar auf die eigene Fahrspur gerät.

Technische Lösung

Die erfindungsgemäße Lösung für diese Aufgabe besteht, ausgehend von dem gattungsgemäßen Verfahren darin, dass das Fahrzeugumfeld auf Hindernisse überwacht wird und bei Erfassen eines Hindernisses die Solltrajektorie des Fahrzeugs derart verändert wird, dass ein gefahrloses Passieren des erfassten Hindernisses ermöglicht wird. Dabei wird die Breite des Hindernisses erfasst und dem erfassten Hindernis ein die Breite des Hindernisses übersteigender Sicherheitsbereich zugeordnet. In Abhängigkeit von der Breite des Hindernisses wird das Hindernis klassifiziert und, beispielsweise, als NKw oder PKw eingestuft. Entsprechend dieser Klassifikation wird dem jeweiligen Hindernis ein vorgegebener Sicherheitsbereich zugeordnet.
Da das Risiko einer Kollision mit steigender Geschwindigkeit zunimmt, kann die Größe des Sicherheitsbereichs vorteilhaft in Abhängigkeit von der Geschwindigkeit, insbesondere in Abhängigkeit von der Relativgeschwindigkeit zwischen dem Fahrzeug und dem Hindernis festgelegt werden.
Um den Sicherheitsbereich für ein risikoloses Passieren des Hindernisses zu erreichen, wird die Solltrajektorie des Fahrzeugs vorteilhaft rechtzeitig vor Erreichen des Hindernisses in einem Übergangsbereich verändert. Dabei ist die Länge des Übergangsbereichs vorteilhaft von der Geschwindigkeit, insbesondere von der Relativgeschwindigkeit zwischen dem Fahrzeug und dem Hindernis, abhängig. Auf diese Weise lassen sich abrupte Lenkkorrekturen des Fahrzeugs bei dem Passieren des Hindernisses vermeiden, was wiederum dem Fahrkomfort zuträglich ist.
Weitere Vorteile ergeben sich aus der Beschreibung, der Zeichnung und den Unteransprüchen.

Kurze Beschreibung der Zeichnungen

Ausführungsformen der Erfindung werden nachfolgend unter Bezug auf die Zeichnung näher erläutert. Dabei zeigt:

Figur 1     ein Blockschaltbild eines Fahrerassistenzsystems;

Figur 2     eine Aufsicht auf einen Verkehrsraum.

Ausführungsformen der Erfindung

Ausführungsformen der Erfindung werden im Folgenden unter Bezug auf die Zeichnung näher erläutert. Bisher bekannte Querführungssysteme, wie beispielsweise LDW, LKS oder eine automatische Querführung in einem Stauassistenzsystem versuchen in der Regel, das Fahrzeug in der Mitte der detektierten Fahrspur zu führen. Die meisten Fahrer empfinden dies zumindest als unangenehm, wenn nicht gar als bedrohlich, wenn ein Fahrzeug auf einer benachbarten Fahrspur sehr nahe an der Fahrspurbegrenzung fährt, oder diese, wenn auch nur leicht, überfährt. Als besonders unangenehm wird eine derartige Situation dann empfunden, wenn es sich bei dem auf der benachbarten Fahrspur fahrenden Fahrzeug um ein großes Fahrzeug, wie einen Bus oder einen NKw handelt. Das Fahrerassistenzsystem wird erfindungsgemäß derart gesteuert, dass in der beschriebenen Situation nicht, wie bisher üblich, streng auf der Mitte der eigenen Fahrspur gefahren wird. Vielmehr wird eine von der Mitte der eigenen Fahrspur abweichende Trajektorie zugelassen. Sofern die Verkehrssituation es zulässt, kann, erforderlichenfalls, sogar an ein Ausweichen auf eine von dem Hindernis noch weiter entfernte benachbarte Fahrspur gedacht werden. Der Kern der Erfindung besteht darin, mittels der von Umfeldsensoren gewonnenen Informationen über das Umfeld des Fahrzeugs, insbesondere über den Verlauf der Fahrspuren und der sich auf den Fahrspuren bewegenden Fahrzeuge, den Sollwert des Querversatzes derart anzupassen, dass ein größerer Abstand zu einem erkannten Hindernis eingehalten werden kann. Dadurch wird eine höhere Akzeptanz des Querführungssystems bei dem Fahrer erreicht, da das Fahrerassistenzsystem dann eine Trajektorie ermöglicht oder bevorzugt, die dem üblichen Verhalten eines Fahrers stärker entspricht. Ein panikartiges Übersteuern des Fahrerassistenzsystems durch den Fahrer oder Angstzustände des Fahrers infolge zu naher Führung des Fahrzeugs entlang eines Hindernisses können dadurch vorteilhaft vermieden werden. Die Erfindung ermöglicht bei einem Fahrerassistenzsystem mit Querführungsfunktion des Fahrzeugs eine dynamische Anpassung des Sollwerts des Querversatzes.

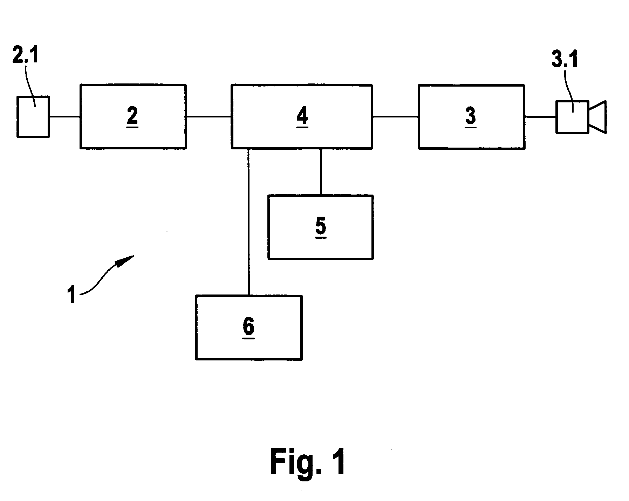

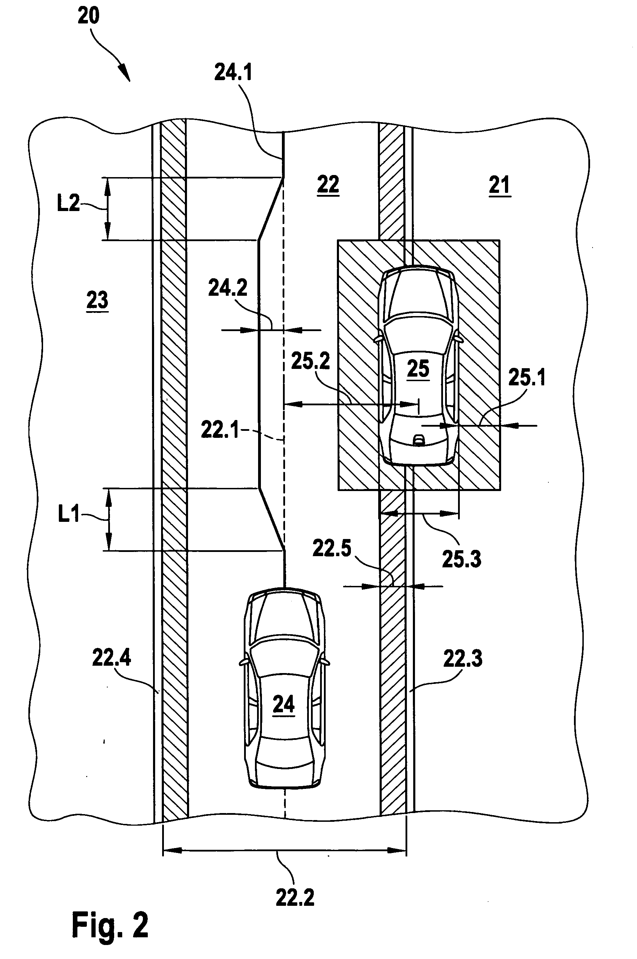

Das in Figur 1 dargestellte Fahrerassistenzsystem 1 umfasst dazu beispielsweise vorteilhaft ein Funktionsmodul 3 (LDW = Lane Departure Warning) oder alternativ ein Funktionsmodul 5 (LKS = Lane Keeping Support), ggf. zusätzlich auch noch ein Funktionsmodul 2 (LCA = Lane Change Aid). Weiterhin können mindestens ein Videosensor 3.1 und mindestens ein Radarsensor 2.1 vorgesehen sein. Alternativ und/oder zusätzlich können auch noch andere Sensortypen, wie beispielsweise Lidarsensoren und Ultraschallsensoren, vorgesehen sein. Ausgangsseitig sind die Funktionsmodule 2 und 3 mit einem Funktionsmodul Koordination 4 verbunden. Mit Hilfe des mindestens einen Videosensors 3.1 erfasst das Funktionsmodul 3 des Fahrerassistenzsystems 1 Fahrspurmarkierungen der vor dem Fahrzeug liegenden Fahrspur 22 bzw. Fahrspuren 21, 22, 23 (Figur 2), um so insbesondere den Verlauf der eigenen Fahrspur 22 zu detektieren. Mit Hilfe des mindestens einen Radarsensors 2.1 überwacht das Funktionsmodul 2 vorzugsweise die hinter dem eigenen Fahrzeug oder seitlich hinter dem eigenen Fahrzeug liegenden Bereiche des Verkehrsraums, um auf diese Weise Objekte in dem Verkehrsraum, insbesondere sich dem eigenen Fahrzeug nähernde Fremdfahrzeuge zu erfassen. Das Funktionsmodul Koordination 4 koppelt die Funktionsmodule 2 und 3 und steuert diese in Abhängigkeit von Funktionsabläufen, die im Folgenden noch erläutert werden. Sofern ein Hindernis detektiert wird, kann über das Funktionsmodul 3 zumindest ein Warnsignal ausgegeben werden. Dabei sind ein optisches und/oder akustisches und/oder haptisches Warnsignal bzw. beliebige Kombinationen dieser Warnsignale möglich. Weiterhin kann, über ein Funktionsmodul 5, in Bordsysteme des Fahrzeugs, wie beispielsweise das Lenksystem, das Bremssystem oder ein ESP-System eingegriffen werden, um ein sicheres Passieren eines erkannten Hindernisses zu ermöglichen. Dies wird im Folgenden unter Bezug auf Figur 2 noch weiter erläutert. Mit Hilfe eines Funktionsmoduls 2 kann vorteilhaft ein Ausweichen des eigenen Fahrzeugs auf eine Fahrspur verhindert werden, auf welcher sich gerade überholende Fahrzeuge annähern.

Figur 2 zeigt eine Aufsicht auf einen Verkehrsraum 20 mit drei Fahrspuren 21, 22, 23. Die Fahrspurbreite 22.2 der Fahrspur 22 ist durch die Fahrspurbegrenzungen 22.3 und 22.4 festgelegt. Die Fahrspurmitte 22.1 der Fahrspur 22 ist durch eine gestrichelte Linie angedeutet. Mit Bezugsziffer 22.5 ist ein Sicherheitsbereich in der Nachbarschaft der Fahrspurbegrenzung bezeichnet. Auf der mittleren Fahrspur 22 bewegt sich ein erstes Fahrzeug 24 (Egofahrzeug) entlang der Trajektorie 24.1. Auf der rechts angrenzenden Fahrspur 21 bewegt sich ein zweites Fahrzeug 25, das sich dem Fahrer des ersten Fahrzeugs 24 als Hindernis darstellt, da es auf seiner Fahrspur 21 zu weit links geraten ist und die Fahrspurbegrenzung 22.3 der Fahrspur 22 bereits überfahren hat. Mit Bezugsziffer 25.2 ist der Querversatz dieses Hindernisses bezeichnet. Mit den Sensoren des Fahrerassistenzsystems 1 werden die Fahrspurbegrenzungen der Fahrspuren und Fahrzeuge aus dem Umfeld des Fahrzeugs 24 erfasst, insbesondere auch Fahrzeuge, die der Fahrer des Fahrzeugs 24 als Hindernis oder Bedrohung empfindet, wie beispielsweise das Fahrzeug 25. Besonders vorteilhaft erfasst das Fahrerassistenzsystem 1 dabei auch Betriebsparameter des eigenen Fahrzeugs 24 und des fremden Fahrzeugs 25, wie beispielsweise Geschwindigkeiten, Abstand voneinander, Abstände der Fahrzeuge 24, 25 zu den Fahrspurbegrenzungen. Besonders vorteilhaft umfasst das Fahrerassistenzsystem 1 auch Mittel für eine Klassifikation eines als potentielles Hindernis erkannten Fahrzeugs 25, um dieses beispielsweise als PKW oder NKw einstufen zu können. Wie vorstehend bereits erwähnt, ist dies deshalb zweckmäßig, weil ein größeres Fahrzeug möglicherweise als bedrohlicher empfunden wird als ein kleineres Fahrzeug. Bei freier Fahrt auf der Fahrspur 22 ohne Beeinträchtigung durch ein Hindernis auf einer Nachbarspur 21, 23, wird das Fahrerassistenzsystem 1 des Fahrzeugs 24 derart gesteuert, dass die LKS-Funktion des Fahrerassistenzsystems 1 das Fahrzeug 24 in der Mitte der Fahrspur 22 hält. Die Trajektorie 24.1 des Fahrzeugs 24 stimmt also mit der Fahrspurmitte 22.1 der Fahrspur 22 überein. Definiert man den Sollwert des Querversatzes 24.2 des Fahrzeugs 24 in Bezug auf die Fahrspurmitte 22.1, was im Folgenden angenommen wird, dann ist in diesem Fall der Sollwert des Querversatzes gleich Null. Gemäß der erfindungsgemäßen Lehre wird nun der Sollwert des Querversatzes 24.2 dynamisch an die aktuelle Verkehrssituation angepasst, wie dies in Figur 2 dargestellt ist. Aus Sicherheitsgründen wird nach Erfassung der Hindernisbreite 25.3 vorsorglich ein Sicherheitsbereich 25.1 um das Hindernis festgelegt, der vorteilhaft risikoabhängig sein kann. Dies bedeutet, dass der Sicherheitsbereich größer gewählt wird, wenn ein höheres Risiko zu erwarten ist. Beispielsweise kann der Sicherheitsbereich 25.1 größer gewählt werden, wenn es sich bei dem Hindernis um einen NKw handelt, und kleiner, wenn es sich um einen Pkw handelt. Zusätzlich kann der Sicherheitsbereich auch noch von der Geschwindigkeit, insbesondere von der Relativgeschwindigkeit der Fahrzeuge 24, 25 abhängig gemacht werden. Dabei wird der Tatsache Rechnung getragen, dass bei einer größeren Relativgeschwindigkeit das Kollisionsrisiko möglicherweise höher ist. Als weitere Vorsichtsmaßnahme wird auch um die jeweiligen Fahrspurbegrenzungen ein Sicherheitsbereich definiert. Beispielsweise um die Fahrspurbegrenzung 22.3 der Sicherheitsbereich 22.5. Der Sollwert des Querversatzes des eigenen Fahrzeugs 24 wird nun vorteilhaft in die Mitte des auf der Fahrspur 22 verbleibenden Korridors gelegt. In dem in Figur 2 dargestellten Beispiel wird der Sollwert des Querversatzes nach folgender Beziehung (1) bestimmt:

$$(1) \quad y_{soll} = 1/2 * (bF/2 - sF + yH + bH/2 + sH).$$

Darin bedeuten:

$y_{soll}$ = Sollwert des Querversatzes des eigenen Fahrzeugs
bF = Breite der Fahrspur
sF = Breite des Sicherheitsbereichs um die Fahrspurbegrenzung
yH = Querversatz des Hindernisses
bH = Breite des Hindernisses
sH = Breite des Sicherheitsbereichs um das Hindernis.

Bei einer freien, von Hindernissen ungestörten Fahrspur 22 ergibt sich dabei ein Sollwert des Querversatzes von Null. Das bedeutet also, dass die Trajektorie des Fahrzeugs 24 auf der Fahrspurmitte 22.1 der Fahrspur 22 liegt. Der Übergang zwischen verschiedenen Sollwerten des Querversatzes erfolgt stetig, vorzugsweise gemäß einer linearen Funktion, wie in Figur 2 dargestellt. Besonders vorteilhaft erfolgen die Übergänge dabei jeweils in ausreichender Entfernung vor Erreichen des Hindernisses bzw. nach dem Passieren des Hindernisses, also möglichst nicht in der Nähe des Hindernisses, um die Fahrsicherheit zu erhöhen. Die Länge des Übergangsbereichs L1, L2 kann dabei vorteilhaft in Abhängigkeit von der Relativgeschwindigkeit zwischen dem Fahrzeug 24 und dem Hindernis, in dem dargestellten Beispiel, das Fahrzeug 25, gewählt werden. So kann beispielsweise bei schneller Annäherung an ein Hindernis schneller mit der Korrektur der Fahrtrichtung des Fahrzeugs 24 begonnen werden als bei einer langsamen Annäherung an das Hindernis. Sofern kein Messwert für die Geschwindigkeit des Hindernisses vorliegt, kann der Übergangsbereich L1, L2 vorteilhaft auch an die Geschwindigkeit des eigenen Fahrzeugs adaptiert werden. Weiterhin können auch die Anfangspunkte der Übergangsbereiche L1, L2 geschwindigkeitsabhängig festgelegt werden, etwa derart, dass bei hoher Relativgeschwindigkeit bzw. hoher Geschwindigkeit des Fahrzeugs 24 eher mit der Veränderung der Trajektorie des Fahrzeugs 24 begonnen wird. Ist die Breite des freien Korridors unter Berücksichtigung der Fahrspurbegrenzungen und der Sicherheitsbereiche kleiner als die Breite des eigenen Fahrzeugs 24, dann kann das Fahrerassistenzsystem 1 dem Fahrer vorteilhaft ein Warnsignal übermitteln und, erforderlichenfalls, dem Fahrer die Querführung des Fahrzeugs 24 überlassen, bis das Hindernis erfolgreich passiert ist. Als Warnsignale eignen sich optische, akustische, haptische Signale oder Kombinationen von diesen. Der Sicherheitsbereich für die Fahrspurbegrenzung kann auch mit einem negativen Wert belegt werden. Das bedeutet, dass ein Überfahren der Fahrspurbegrenzung bis zu dem Wert sF zugelassen ist, sofern der Fahrkorridor nicht durch Hindernisse und diesen Hindernissen zugeordnete Sicherheitsbereiche eingeschränkt ist.

Alle Überlegungen sind, ohne Einschränkung, auch für die Kurvenfahrt gültig, da die Bezugslinie für den Querversatz relativ zur Fahrspurmitte definiert ist.

Bei einem Fahrerassistenzsystem 1 mit LKS-Funktion ist alternativ auch folgende Ausprägung möglich. Bei Auftreten eines Hindernisses gibt es, wie zuvor beschrieben, einen Differenzwert zwischen der Fahrspurmitte und dem Sollwert des Querversatzes. Die Kennlinie für die LKS-Funktion des Fahrerassistenzsystems wird nun derart geändert, dass eine Art Totzone eingefügt wird. Diese Totzone hat die Wirkung, dass für geringe Abweichungen unterhalb eines Schwellwerts von der Solltrajektorie durch das Fahrerassistenzsystem kein Lenkmoment aufgebracht wird. Dadurch wird dem Fahrer ein Bereich zugestanden, in dem er selbst den Querversatz bestimmen kann, ohne eine Gegenreaktion von dem Fahrerassistenzsystem zu erfahren. Denkbar ist auch, dass der die Größe der Totzone bestimmende Schwellwert, abhängig von der Art des Hindernisses, ein- oder beidseitig verkleinert wird.

**Patentansprüche**

1. Verfahren für die Steuerung eines Fahrerassistenzsystems (1) mit Sensoren für die Erfassung des Fahrzeugumfelds, bei dem das Fahrzeugumfeld auf Hindernisse überwacht wird und bei Erfassen eines Hindernisses die Solltrajektorie des Fahrzeugs derart verändert wird, dass ein gefahrloses Passieren des erfassten Hindernisses ermöglicht wird, indem die Breite eines Hindernisses erfasst und dem erfassten Hindernis ein die Breite des Hindernisses übersteigender Sicherheitsbereich zugeordnet wird, **dadurch gekennzeichnet, dass** das Hindernis klassifiziert wird und dass die Größe des Sicherheitsbereichs um das Hindernis klassifikationsabhängig festgelegt wird.

2. Verfahren nach Anspruch 1, **dadurch gekennzeichnet, dass** der Sicherheitsbereich bei einem NKw als Hindernis größer gewählt wird als bei einem Pkw als Hindernis.

3. Verfahren nach einem der vorhergehenden Ansprüche, **dadurch gekennzeichnet, dass** die Größe des Sicherheitsbereichs geschwindigkeitsabhängig festgelegt wird.

4. Verfahren nach einem der vorhergehenden Ansprüche, **dadurch gekennzeichnet, dass** die Größe des Sicherheitsbereichs abhängig von der Relativgeschwindigkeit zwischen dem Fahrzeug (24) und dem Hindernis festgelegt wird.

5. Verfahren nach einem der vorhergehenden Ansprüche, **dadurch gekennzeichnet, dass** die Größe des Sicherheitsbereichs in Abhängigkeit von der Geschwindigkeit des Fahrzeugs festgelegt wird.

6. Verfahren nach einem der vorhergehenden Ansprüche, **dadurch gekennzeichnet, dass** die Größe des Sicherheitsbereichs proportional zu der Geschwindigkeit des Fahrzeugs oder proportional zu der Relativgeschwindigkeit zwischen dem Fahrzeug (24) und dem Hindernis ist.

7. Ver4fahren nach einem der vorhergehenden Ansprüche, **dadurch gekennzeichnet, dass** nach Erfassen eines Hindernisses die Solltrajektorie des Fahrzeugs in einem Übergangsbereich (L1, L2) verändert wird, wobei die Übergangsbereiche (L1, L2) vor und hinter dem Hindernis (Fahrzeug 25) liegen.

8. Verfahren nach einem der vorhergehenden Ansprüche, **dadurch gekennzeichnet, dass** die Länge des Übergangsbereichs (L1, L2) abhängig ist von der Relativgeschwindigkeit zwischen dem Fahrzeug (24) und dem Hindernis (Fahrzeug 25).

9. Verfahren nach einem der vorhergehenden Ansprüche, **dadurch gekennzeichnet, dass** die Länge des Übergangsbereichs (L1, L2) abhängig ist von der Geschwindigkeit des Fahrzeugs (24).

10. Verfahren nach einem der vorhergehenden Ansprüche, **dadurch gekennzeichnet, dass** die Anfangspunkte der Übergangsbereiche (L1, L2) geschwindigkeitsabhängig gewählt werden.

11. Verfahren nach einem der vorhergehenden Ansprüche, **dadurch gekennzeichnet, dass** der die Fahrspur begrenzenden Fahrspurbegrenzung ein Sicherheitsbereich zugeordnet wird.

12. Verfahren nach einem der vorhergehenden Ansprüche, **dadurch gekennzeichnet, dass** der Übergang zwischen verschiedenen Sollwerten des Querversatzes stetig erfolgt.

13. Verfahren nach einem der vorhergehende Ansprüche, **dadurch gekennzeichnet, dass** für die Veränderung der Trajektorie des Fahrzeugs (24) ein Sollwert des Querversatzes festgelegt wird, der nach folgender Beziehung ermittelt wird:

$$y_{soll} = 1/2 * (bF/2 - sF + yH + bH/2 + sH)$$

Darin bedeuten:

$y_{soll}$ = Sollwert des Querversatzes des eigenen Fahrzeugs
bF = Breite der Fahrspur
sF = Breite des Sicherheitsbereichs um die Fahrspurbegrenzung
yH = Querversatz des Hindernisses
bH = Breite des Hindernisses
sH = Breite des Sicherheitsbereichs um das Hindernis.

14. Verfahren nach einem der vorhergehenden Ansprüche, **dadurch gekennzeichnet, dass** unter Berücksichtigung der Fahrspurbegrenzungen und dem Sollwert des Querversatzes die Breite des freien Korridors ermittelt wird und dass ein Warnsignal erzeugt wird, und/oder dem Fahrer die Querführung des Fahrzeugs zugeordnet wird, wenn die Breite des Fahrzeugs (24) die Breite des freien Korridors übersteigt.

15. Vorrichtung für die Steuerung eines Fahrerassistenzsystems (1) mit Sensoren für die Erfassung des Fahrzeugumfelds, bei der Mittel vorgesehen sind, die das Fahrzeugumfeld auf Hindernisse überwachen und die bei Erfassung eines Hindernisses die Solltrajektorie des Fahrzeugs derart verändern, dass ein gefahrloses Passieren des erfassten Hindernisses ermöglicht wird, **dadurch gekennzeichnet, dass** die Vorrichtung Mittel für eine Klassifikation eines als potentiellen Hindernis erkannten Fahrzeugs umfasst.

**Claims**

1.  Method for controlling a driver assistant system (1) with sensors for detecting the surroundings of the vehicle, in which method the surroundings of the vehicle are monitored for obstacles and when an obstacle is detected the setpoint trajectory of the vehicle is changed in such a way that the vehicle is enabled to pass the detected obstacle without risk by virtue of the fact that the width of an obstacle is detected and a safety region which exceeds the width of the obstacle is assigned to the detected obstacle, **characterized in that** the obstacle is classified, and **in that** the size of the safety region around the obstacle is defined as a function of the classification.

2.  Method according to Claim 1, **characterized in that** a larger safety region is selected in the case of a utility vehicle as an obstacle than in the case of a passenger car as an obstacle.

3.  Method according to one of the preceding claims, **characterized in that** the size of the safety region is defined as a function of the speed.

4.  Method according to one of the preceding claims, **characterized in that** the size of the safety region is defined as a function of the relative speed between the vehicle (24) and the obstacle.

5.  Method according to one of the preceding claims, **characterized in that** the size of the safety region is defined as a function of the speed of the vehicle.

6.  Method according to one of the preceding claims, **characterized in that** the size of the safety region is proportional to the speed of the vehicle or proportional to the relative speed between the vehicle (24) and the obstacle.

7.  Method according to one of the preceding claims, **characterized in that** after an obstacle has been detected the setpoint trajectory of the vehicle is changed in a transitional region (L1, L2), wherein the transitional regions (L1, L2) are before and after the obstacle (vehicle 25).

8.  Method according to one of the preceding claims, **characterized in that** the length of the transitional region (L1, L2) is dependent on the relative speed between the vehicle (24) and the obstacle (vehicle 25).

9.  Method according to one of the preceding claims, **characterized in that** the length of the transitional region (L1, L2) is dependent on the speed of the vehicle (24).

10. Method according to one of the preceding claims, **characterized in that** the starting points of the transitional regions (L1, L2) are selected as a function of the speed.

11. Method according to one of the preceding claims, **characterized in that** a safety region is assigned to the lane boundary which bounds the lane.

12. Method according to one of the preceding claims, **characterized in that** the transition between various setpoint values of the lateral offset occurs continuously.

13. Method according to one of the preceding claims, **characterized in that** for the change in the trajectory of the vehicle (24) a setpoint value of the lateral offset is defined which is determined according to the following relationship:

$$y_{soll} = 1/2*(bF/2 - sF + yH + bH/2 + sH).$$

In which:

$y_{soll}$ = setpoint value of the lateral offset of the driver's vehicle

bF = width of the lane
sF = width of the safety region around the lane boundary
yH = lateral offset of the obstacle
bH = width of the obstacle
sH = width of the safety region around the obstacle

14. Method according to one of the preceding claims, **characterized in that** the width of the free corridor is determined by taking into account the lane boundaries and the setpoint value of the lateral offset, and **in that** a warning signal is generated and/or the lateral steering of the vehicle is assigned to the driver if the width of the vehicle (24) exceeds the width of the free corridor.

15. Device for controlling a driver assistant system (1) having sensors for detecting the surroundings of the vehicle, in which device means are provided which monitor the surroundings of the vehicle for obstacles, and which, in the event of an obstacle being detected, change the setpoint trajectory of the vehicle in such a way that the vehicle can pass the detected obstacle without risk, **characterized in that** the device comprises means for classifying a vehicle which is detected as a potential obstacle.

**Revendications**

1. Procédé de commande d'un système d'assistance du conducteur (1) doté de capteurs pour détecter l'environnement du véhicule, dans lequel l'environnement du véhicule est surveillé afin de rechercher d'obstacles et, en cas de détection d'un obstacle, la trajectoire théorique du véhicule est modifiée de façon à permettre un passage sans risque de l'obstacle détecté en déterminant la largeur d'un obstacle et en associant à l'obstacle détecté une zone de sécurité supérieure à la largeur de l'obstacle, **caractérisé en ce que** l'obstacle est classé et **en ce que** la taille de la zone de sécurité entourant l'obstacle est déterminée en fonction du classement réalisé.

2. Procédé selon la revendication 1, **caractérisé en ce que** la zone de sécurité sélectionnée est plus importante pour un obstacle prenant la forme d'un véhicule utilitaire que pour un obstacle prenant la forme d'une voiture.

3. Procédé selon l'une quelconque des revendications précédentes, **caractérisé en ce que** la taille de la zone de sécurité est déterminée en fonction de la vitesse.

4. Procédé selon l'une quelconque des revendications précédentes, **caractérisé en ce que** la taille de la zone de sécurité est déterminée en fonction de la vitesse relative observée entre le véhicule (24) et l'obstacle.

5. Procédé selon l'une quelconque des revendications précédentes, **caractérisé en ce que** la taille de la zone de sécurité est déterminée en fonction de la vitesse du véhicule.

6. Procédé selon l'une quelconque des revendications précédentes, **caractérisé en ce que** la taille de la zone de sécurité est proportionnelle à la vitesse du véhicule ou à la vitesse relative observée entre le véhicule (24) et l'obstacle.

7. Procédé selon l'une quelconque des revendications précédentes, **caractérisé en ce qu'**après la détection d'un obstacle, la trajectoire théorique du véhicule est modifiée dans une zone de transition (L1, L2), les zones de transition (L1, L2) se situant devant et derrière l'obstacle (véhicule 25).

8. Procédé selon l'une quelconque des revendications précédentes, **caractérisé en ce que** la longueur de la zone de transition (L1, L2) dépend de la vitesse relative observée entre le véhicule (24) et l'obstacle (véhicule 25).

9. Procédé selon l'une quelconque des revendications précédentes, **caractérisé en ce que** la longueur de la zone de transition (L1, L2) dépend de la vitesse du véhicule (24).

10. Procédé selon l'une quelconque des revendications précédentes, **caractérisé en ce que** les points de départ des zones de transition (L1, L2) sont choisis en fonction de la vitesse.

11. Procédé selon l'une quelconque des revendications précédentes, **caractérisé en ce qu'**une zone de sécurité est associée à la délimitation de voie délimitant la voie.

**12.** Procédé selon l'une quelconque des revendications précédentes, **caractérisé en ce que** la transition entre les différentes valeurs théoriques du déport transversal est réalisée de façon continue.

**13.** Procédé selon l'une quelconque des revendications précédentes, **caractérisé en ce que** pour modifier la trajectoire du véhicule (24), on détermine une valeur théorique du déport transversal, calculée selon la relation suivante :

$$y_{\text{soll}} = 1/2 * (bF / 2 - sF + yH + bH /2 + sH)$$

où :

  $y_{\text{soll}}$ = valeur théorique du déport transversal du véhicule propre
  bF = largeur de la voie
  sF = largeur de la zone de sécurité entourant la délimitation de voie
  yH = déport transversal de l'obstacle
  bH = largeur de l'obstacle
  sH = largeur de la zone de sécurité entourant l'obstacle.

**14.** Procédé selon l'une quelconque des revendications précédentes, **caractérisé en ce que** la largeur du couloir libre est calculée en tenant compte des délimitations de voie et de la valeur théorique du déport transversal et **en ce qu'**un signal d'avertissement est émis et/ou un guidage transversal du véhicule est associé au conducteur lorsque la largeur du véhicule (24) dépasse la largeur du couloir libre.

**15.** Dispositif de commande d'un système d'assistance du conducteur (1) doté de capteurs pour détecter l'environnement du véhicule, dans lequel des moyens sont prévus pour surveiller l'environnement du véhicule afin de rechercher des obstacles et de modifier la trajectoire théorique du véhicule en cas de détection d'un obstacle, de façon à permettre un passage sans risque de l'obstacle détecté, **caractérisé en ce que** le dispositif comprend des moyens de classement d'un véhicule reconnu comme un obstacle potentiel.

**Fig. 1**

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004015749 A1
- DE 102005021845 A1
- DE 102005002760 A1
- EP 1475765 A2